# EUROPÄISCHE PATENTSCHRIFT

(11) **EP 0 759 387 B1**
(45) Veröffentlichungstag und Bekanntmachung des Hinweises auf die Patenterteilung: **06.06.2001**
(21) Anmeldenummer: 96111175.4
(22) Anmeldetag: 11.07.1996
(51) Int. Cl.: B60T 8/18

(54) **Lastabhängiger Bremskraftregler**
Load-dependent brake pressure control valve
Régulateur de pression de freinage en fonction de la charge

(30) Priorität: 22.08.1995 DE 19530784
(43) Veröffentlichungstag der Anmeldung: 26.02.1997
(73) Patentinhaber: Continental Teves AG & Co. oHG, 60488 Frankfurt (DE)
(72) Erfinder: Füller, Dieter, 65428 Rüsselsheim (DE); Cezanne, Rudolf, 61279 Grävenwiesbach (DE); Leiner, Wolfgang, 65191 Wiesbaden (DE)

(56) Entgegenhaltungen:
- EP-A- 0 486 342
- DE-A- 3 741 718

## Beschreibung

Die vorliegende Erfindung betrifft einen lastabhängigen Bremskraftregler gemäß dem Oberbegriff des Anspruchs 1. Lastabhängige Bremskraftregler, deren Ansteuerung über einen Hebel und eine Feder erfolgt, müssen jeweils den Gegebenheiten des Fahrzeugs, in welches sie eingebaut werden, angepaßt werden. Eine fahrzeugspezifische Größe ist dabei der Abstand zwischen der Befestigung des einen Federendes am Fahrzeug zum Ansteuerhebel. Eine derartige Justierung erfolgt beispielsweise dadurch, daß sich zwischen dem Hebel und dem anderen Federende ein Stift erstreckt, der am Hebel einerseits und an der Feder andererseits zu befestigen ist. Eine der beiden Befestigungen ist axial am Stift verschiebbar. Somit läßt sich den Fahrzeuggegebenheiten entsprechend eine korrekte Stiftlänge einstellen. Bei einer Justage der Stiftlänge ist darauf zu achten, daß der Hebel sich spielfrei im Anschlag am Regelventil befindet. Dies wurde bisher oft manuell vorgenommen, indem der Hebel bis zur Feststellung der zweiten Befestigung im Anschlag festgehalten wurde. Bei Nachlässigkeit können sich jedoch Fehler in der korrekten Einstellung der Stiftlänge einstellen, wenn der Hebel sich nicht in seiner vorgeschriebenen Lage befindet, wenn die Befestigung angebracht wird.

In der EP 0486342B1 wurde daher vorgeschlagen, die variable Befestigung am hebelseitigen Ende des Stiftes vorzusehen, wobei der Stift die Feststellvorrichtung hierzu durchragt und an seinem jenseitigen Ende mit einer Druckfeder versehen ist, die einerseits den Stift und andererseits die Feststellvorrichtung beaufschlagt, welche ihrerseits auf den Hebel wirkt. Eine solche Druckfeder sorgt also automatisch dafür, daß der Hebel in seine vorgeschriebene spielfreie Lage gedrückt wird. Da das herausragende Ende des Stiftes jedoch eine erhebliche Länge von mehreren Zentimetern aufweist, wird in der bekannten Patentschrift vorgeschlagen, dieses Ende des Stiftes mit einer Sollbruchstelle zu versehen, so daß nach erfolgter Justierung der Stiftlänge das nun überflüssige Endstück des Stiftes mitsamt der Feder entfernt werden kann. Damit ergibt sich nach der Fixierung mittels der Feststellvorrichtung der Vorteil, daß nicht ein zusätzlicher Platz für die nun wirkungslose Druckfeder und das überschüssige Stiftende im Fahrzeug benötigt wird.

Nun kann es aber vorkommen, daß selbst zum Einbau eines derartigen Bremskraftreglers nicht genügend Bauraum vorhanden ist, da ja zunächst das Stiftende noch vorhanden ist und entsprechenden Platz benötigt, bis die Fixierung der Stiftlänge erfolgt ist. Des weiteren kann ein unvorsichtiger Handgriff bei der Montage oder eine zu starke Erschütterung beim Transport dazu führen, daß das Stiftende schon vor der Fixierung der Stiftlänge abbricht. Dann sind aufwendige Nachbesserungen erforderlich. Zumindest muß der gesamte Stift ausgewechselt werden, bevor der Bremskraftregler in ein Fahrzeug eingebaut werden kann.

Die Aufgabe der vorliegenden Erfindung besteht darin, einen Bremskraftregler der eingangs genannten Art zu schaffen, welcher einen automatischen Spielausgleich für den Ansteuerhebel aufweist und trotzdem auch schon vor der Fixierung der Stiftlänge wenig Bauraum beansprucht. Zudem soll der Bremskraftregler unempfindlich gegen Erschütterungen sein.

Diese Aufgabe wird gelöst in Verbindung mit den kennzeichnenden Merkmalen des Anspruchs 1. Das Prinzip der vorliegenden Erfindung besteht demnach darin, die verstellbare Befestigung am federseitigen Ende des Stiftes vorzusehen, so daß die Spielausgleichsfeder innerhalb der ohnehin vorhandenen Ansteuerfeder angeordnet werden kann. Da dann das überstehende Stiftende keinen zusätzlichen Bauraum benötigt, ist auch keine Sollbruchstelle notwendig. Der Stift kann also auch bei unsachgemäßer Handhabung nicht zerbrechen.

Nun ist es üblich, als Geräuschdämpfungsmaßnahmen oder zur Zentrierung der Regelkolben an einem Druckstück weitere Druckfedern vorzusehen, welche den Ansteuerhebel derart beaufschlagen, daß er vom Gehäuse des Bremskraftreglers weggedrückt wird. Um auch diese Federkräfte zu kompensieren, ist die Spielausgleichsfeder so zu bemessen, daß sie derartige Federn zu überwinden vermag.

Durch eine dem Anspruch 3 entsprechende Konstruktion der Feststellvorrichtung kann diese drei Funktionen erfüllen. Die erste Funktion betrifft die Fixierung der Stiftlänge. Als zweites kann die Feststellvorrichtung zur Anbringung einer Einstellehre dienen und zum dritten eine stabile Halterung für die Ansteuerfeder bieten.

Eine nähere Erläuterung des Erfindungsgedankens erfolgt nun anhand der Beschreibung einer Zeichnung.

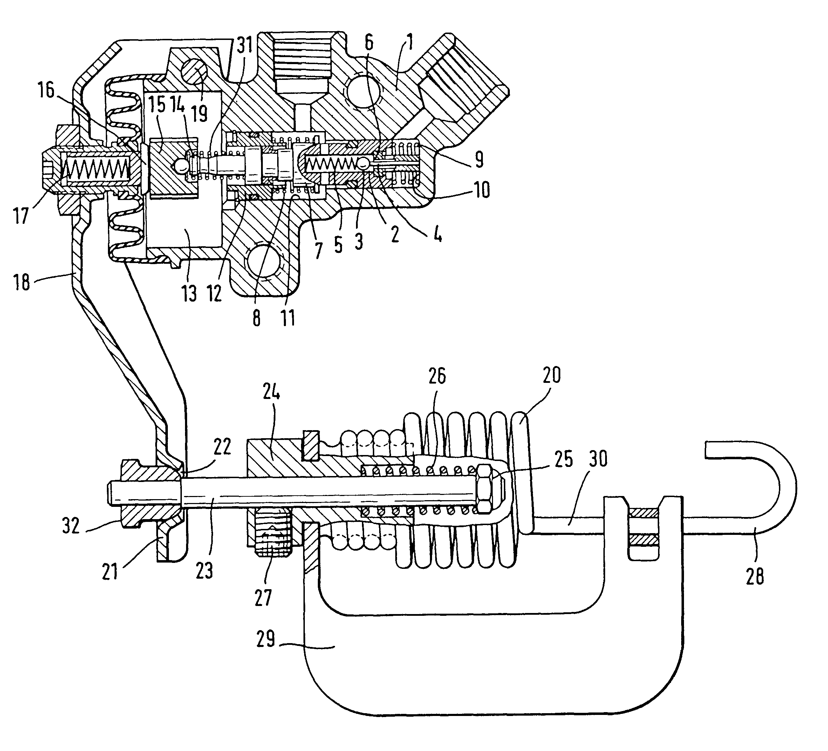

Die einzige Figur zeigt einen erfindungsgemäßen Bremskraftregler, bereit zum Einbau in ein Fahrzeug.

Bei dem dargestellten Bremskraftregler handelt es sich um einen sog. Twin-Bremskraftregler. D.h., daß in Gehäuse 1 zwei Regelventile 2 vorhanden sind, welche sich deckungsgleich in und hinter der Bildebene befinden. Das dargestellte Regelventil 2 weist ein Schließglied 3 auf, welches von einer Ventilfeder 5 zu einem Ventilsitz 6 hin beaufschlagt wird. Das Schließglied 3 ist vom Ventilsitz 6 abgehoben, da es mit einem Stößel 4 im Anschlag an einer Wand 10 liegt, welche auch den Anschlag für einen Regelkolben 7 bildet. Der Regelkolben 7 wird von einer Steuerfeder 8 in Richtung auf diese Wand 10 beaufschlagt. Die Wand 10 ist die Stirnwand einer gestuften Bohrung 11, in deren engerem Abschnitt die größere Stufe des Stufenkolbens 7 abgedichtet aus der Bohrung 11 herausgeführt ist in eine Steuerkammer 13, die druckmittelfrei ist und unter Atmosphärendruck steht. Genauso ist das Regelventil der zweiten, hinter der Bohrung 11 angeordneten Bohrung aufgebaut.

Beide aus den Bohrungen herausgeführten Stufenkolbenenden 14 werden von einem gemeinsamen waagebalkenähnlichen Druckstück 15 in Richtung auf die Wand 10 hin beaufschlagt. In der Mitte dieses Druckstücks 15 greift ein Ansteuerstößel 16 an, welcher eine lastabhängige Kraft gleichmäßig auf die beiden Stufenkolben 7 überträgt. Der Ansteuerstößel 16 besitzt eine teleskopartige Anordnung, welche mit einer Geräuschdämpfungs feder 17 versehen ist. Diese Geräuschdämpfungsfeder 17 ist bestrebt, den Ansteuerstößel zu verlängern, d.h. den Abstand zwischen dem Druckstück 15 und dem Hebel 18, an welchem es befestigt ist, zu vergrößern.

Der Hebel 18 ist über den Lagerbolzen 19 schwenkbar am Gehäuse 1 gelagert. Es handelt sich um einen einarmigen Hebel, so daß sich der Ansteuerstößel 16 und die zur lastabhängigen Ansteuerung dienende Zugfeder 20 auf derselben Hebelseite vom Lagerbolzen 19 aus gesehen befinden. Am Hebelende 21 besitzt der Hebel 18 ein Loch 22, durch welches der Stift 23 geführt ist. An seinem hebelseitigen linken Ende ist der Stift 23 mit einem Kopf 32 versehen, welcher dicker ist als das Loch 22. Der Stift 23 verläuft durch eine Feststellvorrichtung 24 ins Innere der Zugfeder 20. An seinem federseitigen Ende besitzt er ebenfalls einen verdickten Kopf 25, an welchem sich die Spielausgleichsfeder 26 abstützt. Sie umgibt den Stift 23 und ist mit ihrem anderen Ende an der Feststellvorrichtung 24 abgestützt. Die Feststellvorrichtung 24 besitzt in ihrem dem Hebel 18 zugewandten Axialabschnitt eine Feststellschraube 27, welche als Madenschraube gestaltet ist. Diese läßt sich gegen den Stift 23 verschrauben, so daß dieser axial fixiert werden kann. Bei gelöster Schraube 27 kann der Stift 23 frei in der Feststellvorrichtung 24 axial gleiten. Der dem Hebel 18 abgewandte Axialbereich der Feststellvorrichtung 24 ist mit einer Wendelnut versehen, welche mehrere Federwindungen der Zugfeder 20 trägt. Damit ist die Zugfeder 20 mit ihrem hebelseitigen Ende zuverlässig an der Feststellvorrichtung 24 fixiert.

Mit ihrem dem Hebel 18 abgewandten Ende 28, welches hakenförmig umgebogen ist, wird die Zugfeder beim Einbau ins Fahrzeug in ein Fahrzeugteil eingehängt, welches relativ zu dem Fahrzeugteil, an welchem das Gehäuse 1 befestigt wird, lastabhängig beweglich ist. Während dieses Vorgangs wird die Zugfeder 20 durch eine Einstellehre 29 in eine definierte Vorspannung gebracht. Dazu ist die Einstellehre 29 mit einem Ende an der Feststellvorrichtung 24 zwischen den beiden äußeren Axialbereichen befestigt, wo die Feststellvorrichtung 24 im Durchmesser verengt ist. Das andere Ende der Einstellehre 29 ist an einem geraden Abschnitt 30 der Zugfeder 20 nahe dem Ende 28 befestigt.

Die Montage des Bremskraftreglers erfolgt dann so, daß das Gehäuse 1 im Fahrzeug befestigt wird und das Ende 28 der Zugfeder 20 eingehängt wird. Die Spielausgleichsfeder 26 ist so hart, daß sie die Geräuschdämpfungsfeder 17 und die der Zentrierung der Stufenkolben 7 am Druckstück 15 dienende Zentrierfeder 31 zu überwinden vermag. Hierdurch stellt sich der Hebel 18 automatisch in die dargestellte Position ein. Die Geräuschdämpfungsfeder 17 und die Zentrierfeder 31 sind komprimiert, so daß der Ansteuerstößel 16 zusammengefahren ist und das Druckstück 15 am Stufenkolben 7 anliegt. Haben alle Elemente ihre Position eingenommen, so daß der Hebel 18 also spielfrei auf die Regelkolben 7 wirkt, wird die Feststellschraube 27 am Stift 23 fixiert. Damit hat die Spielausgleichsfeder 26 ihre Funktion erfüllt und ist wirkungslos.

Der innerhalb der Zugfeder 20 befindliche Teil des Stiftes 23 und die Spielausgleichsfeder 26 müssen allerdings nicht entfernt werden, da sie keinen zusätzlichen Bauraum beanspruchen. Sie können durch ihre geschützte Lage innerhalb der Zugfeder 20 auch nicht beschädigt werden, wenn ein Regler beim Transport stürzt oder unsachgemäß behandelt wird. Ein Einbau des dargestellten Reglers ist auch bei geringem Platzangebot im Fahrzeug möglich, da auch vor der Fixierung des Stiftes 23 kein Stiftende über die Außenabmessungen der gesamten Anordnung hinausragt.

## Patentansprüche

1. Lastabhängiger Bremskraftregler für ein Fahrzeug, mit einem Gehäuse (1), welches an einem ersten Fahrzeugteil befestigt ist, mit einem Hebel (18), der mindestens ein Regelventil (2) beladungsabhängig beaufschlagt, mit einer ersten Feder (20), welche mit einem Ende an einem beladungsabhängig relativ zum ersten Fahrzeugteil bewegten zweiten Fahrzeugteil befestigt wird und mit ihrem zweiten Ende an einem Stift (23) befestigt wird, der am Ende (21) des Hebels (18) eingehängt ist, mit einer Feststellvorrichtung (24) zur Fixierung eines fahrzeugspezifischen Abstandes zwischen dem zweiten Ende der ersten Feder (20) und der Einhängung am Hebel (18) sowie mit einer zweiten Feder (26), wobei der Stift (23) mit einem Ende die Feststellvorrichtung (24) durchragt und die zweite Feder (26) eine Druckfeder ist und zwischen diesem Ende und der Feststellvorrichtung (24) zum Spielausgleich vor der Fixierung angeordnet ist, wobei die zweite Feder (26) durch die Fixierung unwirksam gemacht wird, dadurch **gekennzeichnet,** daß die Feststellvorrichtung (24) zur Befestigung der ersten Feder (20) am Stift (23) dient und die zweite Feder (26) innerhalb der ersten Feder (20) angeordnet ist.

2. Bremskraftregler nach Anspruch 1, dadurch **gekennzeichnet**, daß die zweite Feder (26) härter ist als die Summe aller zwischen Regelventil (2) und Hebel (18) wirksamen elastischen Mittel (17,31), die der zweiten Feder (26) entgegenwirken.

3. Bremskraftregler nach Anspruch 1 oder 2, dadurch **gekennzeichnet**, daß die Feststellvorrichtung (24) drei Axialabschnitte aufweist, von denen der mittlere zur Anbringung eines Endes einer Einstellehre (29) einen verengten Durchmesser besitzt, der dem Hebelende zugewandte Abschnitt mit einer Feststellschraube (27) zur Fixierung versehen ist und der dritte Abschnitt mit einer Wendelnut versehen ist, in welche mehrere Federwindungen der ersten Feder (20) eingelegt sind.

## Claims

1. Load-responsive brake force controller for a vehicle, including a housing (1) which is secured to a first vehicle part, a lever (18) which acts upon at least one control valve (2) in a load-responsive manner, one first spring (20) which is secured with one end to a second vehicle part that is load-responsively moved in relation to the first vehicle part, and is secured with its second end to a pin (23) that is suspended on the end (21) of the lever (18), a locking device (24) for fixing a vehicle-related distance between the second end of the first spring (20) and the suspension on the lever (18), and including a second spring (26), wherein the pin (23) with one end projects through the locking device (24) and the second spring (26) is a compression spring and is interposed between this end and the locking device (24) for the compensation of clearances before the fixation, the said second spring (26) being rendered ineffective by the fixation,
**characterized** in that the locking device (24) is used to secure the first spring (20) on the pin (23) and the second spring (26) is arranged within the first spring (20).

2. Brake force controller as claimed in claim 1,
**characterized** in that the second spring (26) is stronger than the sum of all elastical means (17, 31) which act between the control valve (2) and the lever (18) and counteract the second spring (26).

3. Brake force controller as claimed in claim 1 or 2,
**characterized** in that the locking device (24) includes three axial portions, the mid-portion of the portions having a constricted diameter for applying one end of a setting gauge (29), the portion close to the lever end being provided with a setscrew (27) for fixation, and the third portion having a spiral groove into which several coils of the first spring (20) are inserted.

## Revendications

1. Régulateur de pression de freinage en fonction de la charge pour un véhicule, comprenant un boîtier (1), qui est fixé à une première partie du véhicule, un levier (18), qui sollicite au moins une vanne de réglage (2) en fonction de la charge, un premier ressort (20), qui est fixé par une extrémité sur un seconde partie du véhicule déplacée en fonction de la charge par rapport à la première partie du véhicule et est fixé par sa seconde extrémité sur une broche (23), qui est suspendue à l'extrémité (21) du levier (18), un dispositif de blocage (24) pour fixer une distance spécifique au véhicule entre la seconde extrémité du premier ressort (20) et la suspension sur le levier (18), ainsi qu'un second ressort (26), dans lequel la broche (23) dépasse par une extrémité du dispositif de blocage (24) et le second ressort (26) est un ressort de compression qui est agencé entre cette extrémité et le dispositif de blocage (24) pour compenser le jeu avant fixation, le second ressort (26) étant désactivé par la fixation, caractérisé en ce que le dispositif de blocage (24) sert à fixer le premier ressort (20) sur la broche (23) et le second ressort (26) est agencé à l'intérieur du premier ressort (20).

2. Régulateur de pression de freinage selon la revendication 1, caractérisé en ce que le second ressort (26) est plus rigide que la somme de tous les moyens élastiques (17, 31) agissant entre la vanne de réglage (2) et le levier (18) qui s'opposent au second ressort (26).

3. Régulateur de pression de freinage selon la revendication 1 ou 2, caractérisé en ce que le dispositif de blocage (24) présente trois sections axiales dont la section centrale possède, pour appliquer une extrémité d'un calibre de réglage (29), un diamètre réduit, tandis que la section tournée vers l'extrémité levier est pourvue d'une vis de blocage (27) pour assurer une fixation et que la troisième section est pourvue d'une rainure hélicoïdale, dans laquelle plusieurs spires du premier ressort (20) sont insérées.
